# EUROPEAN PATENT APPLICATION

(11) **EP 4 198 265 A1**
(43) Date of publication of application: **21.06.2023**
(21) Application number: 21425069.8
(22) Date of filing: 20.12.2021
(51) Int. Cl.: F01D 9/04

(54) **VANE FOR A GAS TURBINE ASSEMBLY FOR POWER PLANT AND GAS TURBINE ASSEMBLY FOR POWER PLANT COMPRISING SUCH A VANE**

(71) Applicant: ANSALDO ENERGIA S.p.A., 16152 Genova (IT)
(72) Inventor: Elli, Stefano, 16152 GENOVA (IT)
(74) Representative: Martini, Gabriele

(57) **Abstract**

A turbine vane for a gas turbine assembly for power plant; wherein the turbine vane comprises: in inner platform; an outer platform; an airfoil body extending between the inner and the outer platform; wherein the inner platform comprises a trailing edge; wherein the trailing edge of the vane inner platform is provided with a slot.

## Description

### Field of the Invention

The present invention relates to the technical field of the gas turbine assemblies for power plant. As known, in these assemblies an incoming air flow is compressed in a compressor and then mixed with fuel (gas fuel and/or oil fuel) in a combustor to produce a hot gas flow to be expanded in a turbine. The rotation of the turbine generates a rotating work on a rotor in turn connected to a generator for power production. The compressor and the turbine comprises a plurality of rows of blades connected to the rotor. An outer casing is provided surrounding the rotating parts and supporting a plurality of rows of vanes interposed between the blades for guiding the flow. In this technical field, the present invention addresses the problem of how to reduce the stress level at the vane trailing edge.

### Description of prior art

As known, a gas turbine assembly for power plant comprises a compressor unit, a combustor unit and a turbine unit. The compressor unit is configured for compressing incoming air supplied at a compressor inlet. The compressed air leaving the compressor unit flows into a closed volume (called "plenum") and from there into the combustor unit. This combustor unit comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and flows by the turbine unit performing a rotating work on a rotor connected to a generator. Usually the same rotor, that could be made as a single piece or in form of a plurality of adjacent rotor disks, supports also the rotating parts of the compressor assembly and it defines the main axis of the system. As known, the turbine unit and the compressor unit comprise a plurality of rows of rotating blades supported by the rotor. As known, the rotor and the connected rotating parts are housed in a casing that is concentric and surrounding the gas turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known. According to a first embodiment, the gas turbine comprises a first combustor and a second combustor that are annular shaped and are physically separated by a turbine, called high pressure turbine. Downstream the second combustor a second turbine is provided (called low pressure turbine).

According to a second embodiment, the sequential gas turbine is not provided with the high-pressure turbine and the combustor assembly is realized in form of a plurality of can-combustors wherein each can-combustor comprises a first combustor and a second combustor arranged directly one downstream the other inside a common casing can-shaped.

These two examples of gas turbine assemblies have been cited only as non-limiting examples wherein the present invention can be applied. Indeed, according the present invention the gas turbine assembly may also involve a single stage of combustion with a single annular combustion chamber.

As known in this technical field, the terms "circumferential, radial, axial, outer and inner" refer to the rotor or assembly axis (that is parallel to the main air/hot gas flow). The terms "downstream and upstream" refer to the main direction of the air/hot gas flowing from the compressor to the turbine.

As known, each vane comprises a statoric of fixed airfoil body configured for guiding the flow flowing in the gas turbine. Each vane comprises moreover an inner platform, configured to be coupled to a stator in ring facing the rotor, and an outer platform coupled to the outer casing. Each platform comprises a trailing or downstream edge and a leading or upstream edge. Due to the high mechanical and thermal stress acting on the trailing ends of turbine vanes, in particular at the trailing edge region in coincidence with the fillet (where the airfoil and platform meet), the trailing edge region is susceptible to crack initiation which may ultimately lead to component failure.

Thus, today there is the need to find a new solution for reducing the stress level at trailing edge ends of turbine vanes.

### Disclosure of the invention

Accordingly, a primary object of the present invention is to provide a new and inventive vane (in particular a turbine vane) for a gas turbine assembly wherein the stress level at trailing edge end is reduced. In general, the present invention can be applied in any kind of gas turbine assembly because all gas turbine assemblies comprise a plurality of turbine vanes. Thus, a gas turbine assembly according to the present invention is an assembly comprising:
- a rotor having an axis;
- a compressor comprising blades connected to the rotor;
- at least a turbine comprising blades connected to the rotor;
- at least a combustor; and
- an outer casing supporting vanes, wherein at least a turbine vane is made according to the present invention.

The above listed components are well known by the skill person in the field of gas turbine assembly. Thus, it is implicit that the compressor is configured for compressing incoming air, the combustor is fed by compressed air and fuel for generating a hot gas and in the turbine the hot gas expansion generates a rotating work on the rotor in turn connected to a generator. The gas turbine assembly may be a sequential combustor turbine with a high pressure turbine between two combustion stages or it may comprise a plurality of can combustors wherein each can combustor involves a double combustion. For additional general details, it is possible to refer to the enclosed figures and to the prior art documents belonging to this technical field.

According to the present invention a vane is provided; wherein the vane comprises:
- in inner platform;
- an outer platform;
- an airfoil body extending between the inner and outer platform.

Also the above listed components are well known by the skill person in the field of gas turbine assembly. Thus, it is implicit that the inner platform is configured to cooperate (via a stator ring for instance) to the rotor, that the outer platform is supported by an outer casing surrounding the rotating parts of the assembly, and that the airfoil is configured for guiding the hot gas flow flowing by the turbine. The vanes are adjacent arranged in circumferential rows about the rotor axis so that adjacent inner and the outer platforms form an inner and outer ring limiting the channel for the hot gas. Each platform, i.e. the inner or the outer platform, comprises a leading or upstream edge, a trailing or downstream edge and two lateral edges.

Starting from the above definitions, according to the main aspect of the invention, the inner and/or the outer platform is provided with at least a slot configured to reduce the platform resistance to deformation during the operations.

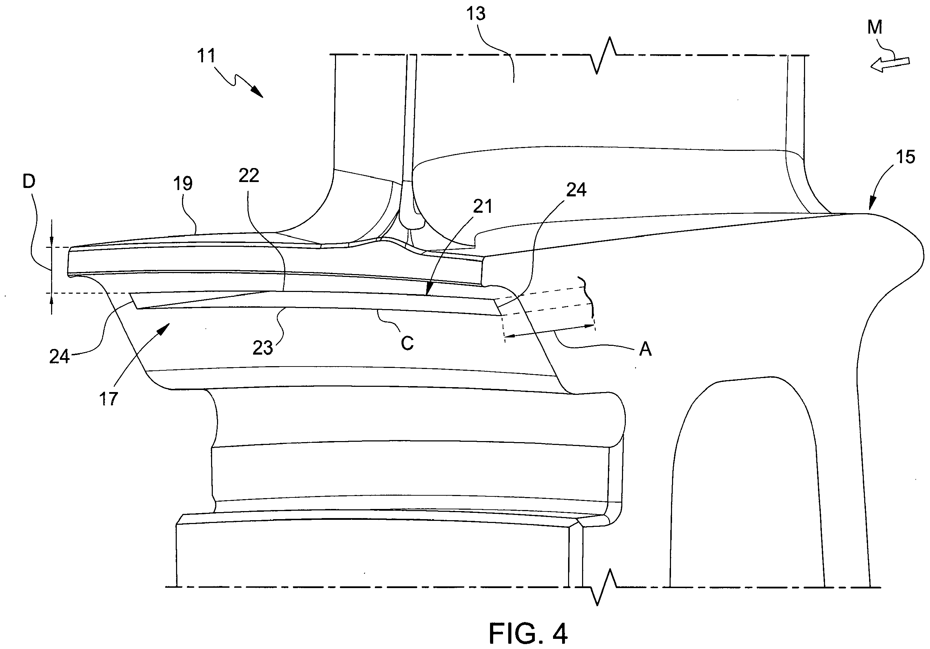

The shape and the position of the slot may vary according to particular circumstances. Following figures 4-6 will disclose some different embodiments. Preferably, the slot is provided at the trailing or downstream edge of the inner or outer platform, however the slot or any additional slot may be provided at the leading or upstream edge and/or at the trailing or downstream edge and/or at at least one of the two lateral edges. The slot is blind and not configured to be filled with seals. If realized in the lateral edges the slot may be obtained inside the seal groove already present in the platform or above or below this groove. In any case, the seal does not penetrate inside the slot that remains an empty space reducing the platform resistance to deformation during the operations.

Preferably, the circumferential extent of the slot is substantially greater than the circumferential extent of the trailing edge of the inner vane platform.

Preferably, the axial extent or depth of the slot is at least the 5% of the axial extent of the inner vane platform.

Preferably, the slot is a circumferential slot with a rectangular opening or section with a circumferential inner edge, a circumferential outer edge and two radial or side edges.

Preferably, the length of the extent of the circumferential inner or outer edge is at least 5 times of the extent of the radial edge.

Preferably, the distance between the circumferential outer edge of the slot and the platform surface in contact whit the hot gas is no more than 1/3 of the entire platform radial maximum thickness in the slot area.

Preferably, the slot can be obtained by standard machining operations (like EDM or grinding).

### Brief description of drawings

The invention may be best understood by reference to the following detailed description, which describes an exemplary embodiment of the invention, taken in conjunction with the accompanying drawings, in which:
- figure 1 is a schematic view of a not-limiting example of a gas turbine that can be improved by the present invention;
- figure 2 is an enlarged view of the portion of figure 1 labelled as II;
- figure 3 is schematic prospective view of the vane of figure 2;
- figure 4 is an enlarged prospective view of the inner platform trailing edge of the vane of figure 3 with a first embodiment of a slot according to the present invention;
- figures 5 and 6 disclose two different embodiments of a slot according to the present invention.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

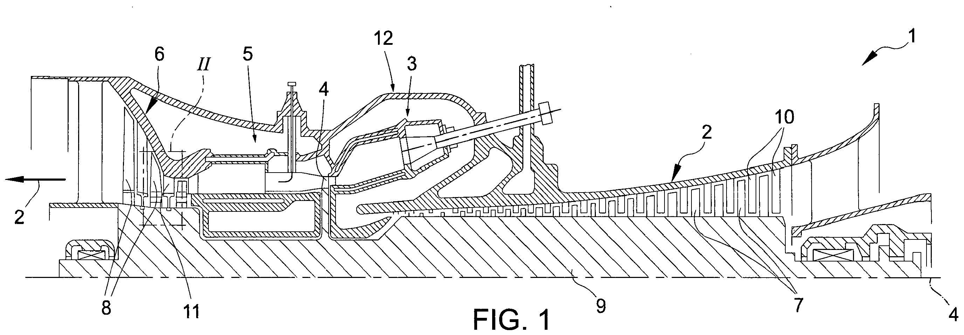

Reference will now be made to the drawing figures to describe the present invention in detail.
Reference is made to figure 1 which is a schematic view of a not-limiting example of a gas turbine assembly for power plant that can be improved by the present invention. In figure 1 the gas turbine assembly 1 comprises a compressor 2, a first combustor 3, a high pressure turbine 4, a second combustor 5 and a low pressure turbine 6. The compressor and the turbines comprise blades (compressor blades 7 and turbine blades 8) supported by a common rotor 9 having an axis A. The compressor and the low pressure turbine comprise moreover vanes (compressor vanes 10 and turbine vanes 11) supported by an outer casing 12. The skill person well knows how an assembly as disclosed in figure 1 works. Please notice that the assembly of figure 1 is only a non-limiting example.

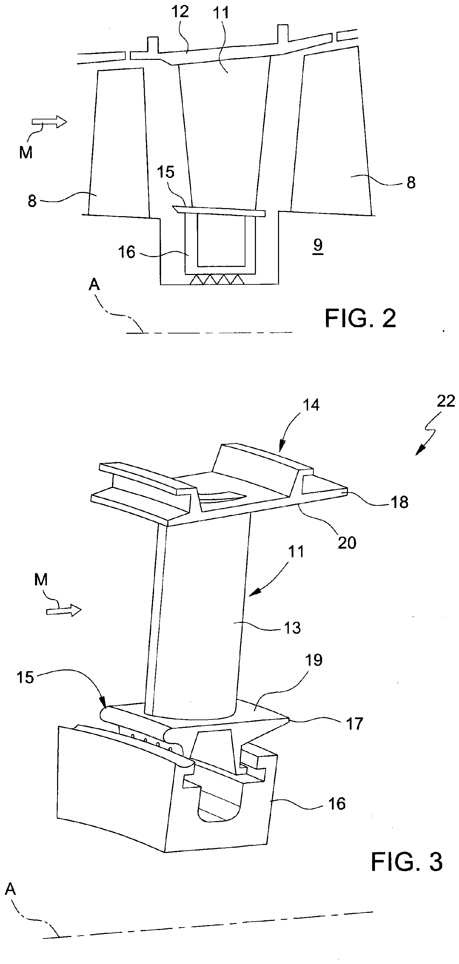

Figure 2 is an enlarged view of the portion of figure 1 labelled as II. In particular, figure 2 discloses a turbine vane 12 between two blades 8 wherein the vane has an outer end supported by the casing 12 and a inner end facing the rotor 9. In figure 2 the arrow M refers to the hot gas direction.

Figure 3 is schematic prospective view of the vane of figure 2. According to figure 3 the vane 11 comprises an airfoil body 13, an outer platform 14 configured to the coupled to the casing 12 and an inner platform 15 configured to the coupled to a star ring 16 facing the rotor. In figure 3 the references 17 and 18 refer to the trailing edges of the inner and outer platform. The references 19 and 20 refer to the surfaces of the inner and outer platform in contact to the hot gas.

Figure 4 is an enlarged prospective view of the trailing edge of the inner platform of the vane of figure 3. This figure discloses an example of a vane according to the invention, namely a vane where a slot 21 has been obtained at the trailing edges 17 of the inner platform. According to this example, the circumferential extent C of the slot is substantially equal to the circumferential extent of the trailing edge 17 of the inner vane platform 15. The axial extent A or depth of the slot 21 is 5% of the axial extent of the inner vane platform 15. The slot 21 is a circumferential slot with a rectangular opening or section with a circumferential inner edge 22 a circumferential outer edge 23 and two radial or side edges 24. The length of the extent of the circumferential inner 22 edge is 5 times the extent of the radial edge 24. The distance D between the circumferential outer edge 22 of the slot 21 and the inner platform surface 19 in contact whit the hot gas is 1/5 of the entire radial thickness of the inner platform.

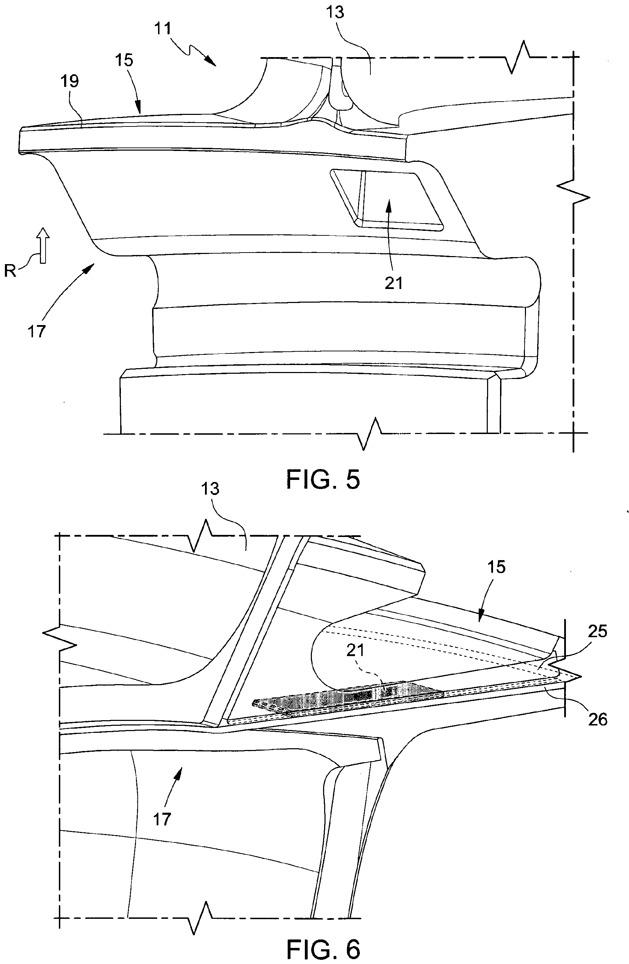

Figure 5 discloses an alternative embodiment of the invention. According to this embodiment, the slot 21 is obtained substantially in the same position of the previous example, i.e. at the trailing edge 17 of the inner vane platform 15. In this example the shape of the slot is different and may be defined as "open". The slot of figure 4 may be obtained by moving the machining tool (like EDM or grinding device) along the axial direction. On the contrary in figure 5 this tool has been moved radially (R direction) and thus the slot obtained may be defined as open or inwardly open.

Finally, figure 6 discloses an embodiment wherein the slot 21 has been obtained in the lateral edge 25 of the platform, in particular inside a groove 26 configured for housing a seal sealing two adjacent platforms. Please notice that in any case the seal does not penetrate inside the slot that remains an empty space reducing the platform resistance to deformation during the operations.

Although the invention has been explained in relation to its preferred embodiment as mentioned above, it is to be understood that many other possible modifications and variations can be made without departing from the scope of the present invention. For instance, in alternative or in combination, also the trailing edge of the vane outer platform may be provided with a slot according to the present invention. It is, therefore, contemplated that the appended claim or claims will cover such modifications and variations that fall within the true scope of the invention.

## Claims

1. A turbine vane for a gas turbine assembly for power plant; wherein the turbine vane (11) comprises:
- in inner platform (15);
- an outer platform (14);
- an airfoil body (13) extending between the inner (15) and the outer platform (14);
**characterized in that** the vane outer and/or inner platform (15) is provided with at least a slot (21) configured to reduce the platform resistance to deformation during the operations.

2. Vane as claimed in claim 1, wherein the outer and/or inner platform (15) comprises a trailing edge (17) a leading edge and two lateral edges; the slot being obtained in the trailing edge (17) and/or in at least one lateral edge.

3. Vane as claimed in claim 1 or 2, wherein the slot (21) is blind and in use not filled with seals.

4. Vane as claimed in any one of the foregoing claims, wherein the circumferential extent C of the slot (21) is greater than the circumferential extent of the trailing edge (17) of the inner vane platform (15).

5. Vane as claimed in any one of the foregoing claims, wherein the axial extent or depth A of the slot (21) is at least the 5% of the axial extent of the inner vane platform (15) .

6. Vane as claimed in any one of the foregoing claims, wherein the slot (21) is a circumferential slot with a rectangular opening or section with circumferential inner edge (23), a circumferential outer edge (22) and two radial or side edges (24).

7. Vane as claimed in any one of the foregoing claims, wherein the length of the extent of the circumferential inner (23) or outer edge (22) of the slot (21) is at least 5 times of the extent of the radial edges (24) the slot (21).

8. Vane as claimed in any one of the foregoing claims, wherein the distance between the circumferential outer edge (22) of the slot the platform surface (19) in contact whit the hot gas is no more than 1/3 of the entire platform radial maximum thickness in the slot area.

9. Vane as claimed in any one of the foregoing claims, wherein the slot (21) is obtained by machining operations, preferably EDM or grinding.

10. Vane as claimed in any one of the foregoing claims, wherein the vane outer platform comprises a trailing edge; also the trailing edge of the vane outer platform is provided with a slot.

11. A gas turbine assembly for power plant, the assembly comprising:
- a rotor (9) having an axis A;
- a compressor (2) comprising blades (7) connected to the rotor (9);
- at least a turbine (4, 6) comprising blades (11) connected to the rotor (9);
- a outer casing (12) supporting compressor vanes (10) and turbine vane (11);
wherein at least a turbine vane (11) is made according to any one of the foregoing claims.
